# EUROPÄISCHE PATENTANMELDUNG

(11) **EP 3 477 245 A1**
(43) Veröffentlichungstag der Anmeldung: **01.05.2019**
(21) Anmeldenummer: 18000836.9
(22) Anmeldetag: 26.10.2018
(51) Int. Cl.: G01B 7/14, G01B 7/30, G01D 5/20

(54) **VERFAHREN ZUR BESTIMMUNG EINES ABSTANDES ZWISCHEN EINEM ERSTEN OBJEKT UND EINEM ZWEITEN OBJEKT**

(30) Priorität: 27.10.2017 DE 102017009998
(71) Anmelder: Firma Pepperl + Fuchs GmbH, 68307 Mannheim (DE)
(72) Erfinder: Bernitzke, Andreas, 67117 Limburgerhof (DE); Höbel, Heiko, 67549 Worms (DE); Zarki, Mohamed, 67067 Ludwigshafen (DE)
(74) Vertreter: Koch Müller Patentanwaltsgesellschaft mbH

(57) **Zusammenfassung**

Verfahren zur Bestimmung eines Abstandes zwischen mindestens einem ersten Objekt und einem zweiten Objekt, wobei das erste Objekt und das zweite Objekt jeweils einen metallischen Geber aufweisen, mehrere Empfangsspulensysteme entlang einer linienförmigen Wegstrecke angeordnet sind, jedes Empfangsspulensystem eine Induktionsspule und einen Oszillator umfasst, das erste Objekt in einem ersten Abstand zu der Wegstrecke entlang der Wegstrecke beweglich ist und in einem ersten Verfahrensschritt eine Position des ersten Objektes entlang der Wegstrecke berührungslos bestimmt wird, in einem auswertenden Verfahrensschritt mittels einer Differenzbildung zwischen der Position des ersten Objekts und einer Position des zweiten Objekts der Abstand zwischen dem ersten Objekt und dem zweiten Objekt bestimmt wird, wobei das zweite Objekt entweder in einem zweiten Abstand zu der Wegstrecke entlang der Wegstrecke beweglich ist und in einem zusätzlichen Verfahrensschritt vor dem auswertenden Verfahrensschritt die Position des zweiten Objektes entlang der Wegstrecke berührungslos bestimmt wird oder die Position des zweiten Objekts bekannt ist.

## Beschreibung

Die Erfindung betrifft ein Verfahren zur Bestimmung eines Abstandes zwischen einem ersten Objekt und einem zweiten Objekt.

Aus der EP 1 306 649 A1 ist eine induktive Sensoranordnung zur Erfassung einer Translationsposition bekannt, bei der eine Mehrzahl Induktivitäten entlang einer zu überwachenden Wegstrecke angeordnet sind. Aus der DE 101 30 572 A1 sowie aus der EP 1649 250 B2 sind induktive Wegsensor bekannt.

Vor diesem Hintergrund besteht die Aufgabe der Erfindung darin, eine Vorrichtung anzugeben, die den Stand der Technik weiterbildet.

Die Aufgabe wird durch ein Verfahren zur Bestimmung eines Abstands zwischen einem ersten Objekt und einem zweiten Objekt mit den Merkmalen des Patentanspruchs 1 gelöst. Vorteilhafte Ausgestaltungen der Erfindung sind Gegenstand von Unteransprüchen.

Gemäß dem Gegenstand des Verfahrens zur Bestimmung eines Abstands zwischen mindestens einem ersten Objekt und einem zweiten Objekt weisen das erste Objekt und das zweite Objekt jeweils einen metallischen Geber auf, wobei mehrere Empfangsspulensysteme entlang einer linienförmigen Wegstrecke angeordnet sind.

Jedes Empfangsspulensystem umfasst eine Induktionsspule und einen Oszillator.

Das erste Objekt ist in einem ersten Abstand zu der Wegstrecke entlang der Wegstrecke beweglich.

In einem ersten Verfahrensschritt wird eine Position des ersten Objekts entlang der Wegstrecke berührungslos bestimmt.

In einem auswertenden Verfahrensschritt wird mittels einer Differenzbildung zwischen der Position des ersten Objekts und einer Position des zweiten Objekts der Abstand zwischen dem ersten Objekt und dem zweiten Objekt bestimmt, wobei das zweite Objekt entweder in einem zweiten Abstand zu der Wegstrecke entlang der Wegstrecke beweglich ist.

In einem zusätzlichen Verfahrensschritt wird vor dem auswertenden Verfahrensschritt die Position des zweiten Objektes entlang der Wegstrecke berührungslos bestimmt.

Alternativ ist die Position des zweiten Objekts bekannt.

Es versteht sich, dass die Empfangsspulensysteme mittels einer elektrischen Wirkverbindung mit einer Auswerteschaltung verbunden sind.

Mittels der Empfangsspulensysteme werden die Positionen der beiden Objekte bestimmt. Die Bestimmung erfolgt hierbei vorzugsweise in Echtzeit, so dass sich auch der Abstand zwischen den beiden Objekten in Echtzeit bestimmen lässt.

Es versteht sich, dass die die beiden Objekte in einer ersten Alternative direkt, d.h. ohne ein weiteres zwischen dem ersten Objekt und dem zweiten Objekt angeordnetes Objekt aufeinanderfolgen.

In der zweiten Alternative ist zwischen dem ersten Objekt und dem zweiten Objekt ein weiteres bewegliches Objekt angeordnet.

Ferner versteht es sich, dass ein metallischer Bereich des Objekts als Geber verstanden wird. Die Einheit aus Geber und Objekt lässt sich einteilig oder auch mehrteilig ausbilden.

Es sei angemerkt, dass in einer Ausführungsform die jeweiligen Objekte Rollen aufweisen.

Ein Vorteil des Verfahrens ist es, dass sich aus der Position des ersten Objekts und aus der Position des zweiten Objekts der Abstand zwischen den zueinander beglichen Objekten bestimmen lässt, ohne dass eine weitere Messung durchgeführt wird.

In einer Ausführungsform weist jede der mehreren Empfangsspulensysteme eine Empfindlichkeitskurve auf und die mehreren Empfangsspulensysteme sind so entlang der Wegstrecke positioniert, dass sich die Empfindlichkeitskurven von jeweils zueinander unmittelbar benachbarten Empfangsspulensystemen wenigstens teilweise überlappen.

Die Empfindlichkeitskurven geben die durch den metallischen Geber generierte Bedämpfung der Empfangsspulensysteme in Abhängigkeit der Geberposition relativ zu dem Spulensystem wieder. Es sei angemerkt, dass die Bedämpfung der Empfangsspulensysteme vorzugsweise mittels den In dem Geber verursachten Wirbelstromverluste erzeugt wird. Anders ausgedrückt, das elektrische Wechselfeld der Induktionsspule wird bedämpft, d.h. die Amplitude des Oszillatorkreises wird durch den Geber verringert.

Der Überlapp ermöglicht das Bestimmen einer Geberposition zwischen den benachbarten Empfangsspulensystemen, die unabhängig von dem lateralen Abstand des Gebers zu den beiden Empfangsspulensystemen ist. Eine genaues Positionieren bzw. Justieren und/oder Kalibrieren des seitlichen Abstands der Geber zu der Wegstrecke wird hierdurch überflüssig.

Gemäß einer Weiterbildung sind die Empfangsspulensysteme entlang der Wegstrecke um die Wegstrecke herum zickzackförmig angeordnet.

Beispielsweise ist ein erster Teil der Empfangsspulensysteme in einer ersten Reihe auf einer ersten Seite der linienförmigen Wegstrecke parallel zu der Wegstrecke angeordnet und der zweite Teil der Empfangsspulen in einer zweiten Reihe auf der gegenüberliegenden Seite der linienförmigen Wegstrecke ebenfalls parallel zu der Wegstrecke, wobei die Empfangsspulensysteme der ersten Reihe zu denen der zweiten Reihe entlang der Wegstrecke versetzt angeordnet sind.

Anders ausgedrückt weisen in einer zickzackförmigen Anordnung entlang der Wegstrecke aufeinanderfolgende Empfangsspulensysteme in einer senkrecht zu der Wegstrecke verlaufenden Richtung abwechselnd einen positiven und einen negativen Abstand auf. Die Anordnung ermöglicht es unter anderem, die Empfangsspulen in Richtung der Wegstrecke mit einem besonders geringen Abstand zueinander anzuordnen. Es versteht sich, dass sich hierdurch die Auflösung der Position entlang der Wegstrecke erhöhen lässt.

Gemäß einer weiteren Ausführungsform ist die Wegstrecke als Gerade ausgebildet.

In einer alternativen Ausführungsform weist die Wegstrecke eine geschlossene Form auf und ist bevorzugt kreisförmig oder elliptisch ausgebildet.

In einer weiteren Weiterbildung wird anhand der Position des ersten Objekts und der Position des zweiten Objekts oder anhand des Abstands zwischen dem ersten Objekt und dem zweiten Objekt ein Winkel zwischen den beiden Positionen bestimmt.

In einer anderen Weiterbildung wird ein Abstand eines weiteren in einem dritten Abstand zu der Wegstrecke entlang der Wegstrecke beweglichen Objekts zu dem zweiten Objekt und/oder zu dem ersten Objekt bestimmt wird, wobei das weitere Objekt einen metallischen Geber aufweist.

In einer anderen Ausführungsform werden die Position des ersten Objektes und die Position des zweiten Objektes jeweils mittels Empfindlichkeitskurven der Empfangsspulensysteme bestimmt.

Gemäß einer weiteren Weiterbildung weisen die Induktionsspulen einen Spulendurchmesser auf und der kleinste bestimmbare Abstand zwischen dem ersten Objekt und dem zweiten Objekt ist größer als ein Eineinhalbfaches des Spulendurchmessers.

Gemäß einer anderen Weiterbildung werden zusätzlich der erste Abstand des ersten Objekts zu der Wegstrecke und/oder der zweite Abstand des zweiten Objekts zu der Wegstrecke mittels Empfindlichkeitskurven der Empfangsspulensysteme bestimmt.

In einer weiteren Ausführungsform beträgt eine Länge der Wegstrecke höchstens 2m.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigen, die
- Figur 1: eine schematische Ansicht auf eine erste erfindungsgemäße Ausführungsform,
- Figur 2: eine schematische Ansicht einer zweiten erfindungsgemäßen Ausführungsform.

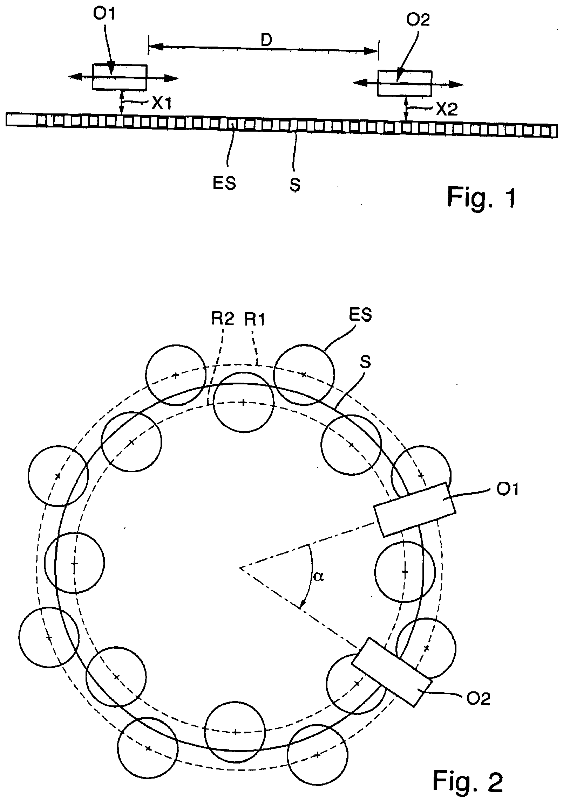

Die Abbildung der Figur 1 zeigt eine Ansicht einer ersten Ausführungsform, des Verfahrens zur Bestimmung eines Abstandes D zwischen einem ersten Objekt O1 und einem zweiten Objekt O2.

Das erste Objekt O1 ist entlang einer linienförmigen Wegstrecke S beweglich und weist zu der Wegstrecke S einen ersten Abstand x1 auf. In einem ersten Verfahrensschritt wird die Position des ersten Objektes O1 entlang der Wegstrecke S berührungslos bestimmt.

Das zweite Objekt O1 ist ebenfalls entlang der Wegstrecke S beweglich und weist zu der Wegstrecke S einen zweiten Abstand x2 auf. In einem zweiten Verfahrensschritt wird die Position des zweiten Objektes O2 entlang der Wegstrecke S berührungslos bestimmt.

Hierfür weisen das erste und das zweite Objekt O1 und O2 jeweils einen metallischen Geber auf und entlang der Wegstrecke S sind hierfür mehrere Empfangsspulensysteme ES angeordnet, wobei jedes Empfangsspulensystem über eine Induktionsspule und einen Oszillator verfügt.

Die jeweilige Position der Objekte O1 und O2 lässt sich so berührungslos anhand der von den metallischen Gebern generierten Bedämpfung der Empfangsspulensysteme ermitteln.

In einem auswertenden Verfahrensschritt wird mittels einer Differenzbildung aus der Position des ersten Objekts O1 und aus der Position des zweiten Objekts O2 der Abstand D zwischen dem ersten Objekt O1 und dem zweiten Objekt O2 bestimmt.

In der Abbildung der Figur 2 ist eine weitere Ausführungsform dargestellt. Im Folgenden werden nur die Unterschiede zu der Abbildung der Figur 1 erläutert.

Die Wegstrecke S weist eine geschlossene Form auf und ist kreisförmig ausgebildet.

Die Empfangsspulensysteme sind in zwei Reihen R1 und R2 auf zwei einander gegenüberliegenden Seiten der Wegstrecke S parallel zu dieser angeordnet, wobei die Empfangsspulensysteme der ersten Reihe R1 zu den Empfangsspulensystemen der zweiten Reihe versetzt angeordnet sind. Hierdurch ergibt sich eine zickzackförmige Anordnung der Empfangsspulensysteme um die Wegstrecke S.

Anhand der bestimmten Positionen der Objekte O1 und O2 wird der Winkel α zwischen den Positionen bzw. Objekten O1 und O2 bestimmt.

## Patentansprüche

1. Verfahren zur Bestimmung eines Abstands (D) zwischen mindestens einem ersten Objekt (O1) und einem zweiten Objekt (O2), wobei das erste Objekt (O1) und das zweite Objekt jeweils einen metallischen Geber aufweisen,
**dadurch gekennzeichnet, dass**
- mehrere Empfangsspulensysteme (ES) entlang einer linienförmigen Wegstrecke angeordnet sind,
- jedes Empfangsspulensystem eine Induktionsspule und einen Oszillator umfasst,
- das erste Objekt (O1) in einem ersten Abstand (x1) zu der Wegstrecke (S) entlang der Wegstrecke (S) beweglich ist und in einem ersten Verfahrensschritt eine Position des ersten Objektes (O1) entlang der Wegstrecke (S) berührungslos bestimmt wird,
- in einem auswertenden Verfahrensschritt mittels einer Differenzbildung zwischen der Position des ersten Objekts (O1) und einer Position des zweiten Objekts der Abstand (D) zwischen dem ersten Objekt (O1) und dem zweiten Objekt (O2) bestimmt wird, wobei
- das zweite Objekt (O2) entweder in einem zweiten Abstand zu der Wegstrecke (S) entlang der Wegstrecke (S) beweglich ist und in einem zusätzlichen Verfahrensschritt vor dem auswertenden Verfahrensschritt die Position des zweiten Objektes (O2) entlang der Wegstrecke (S) berührungslos bestimmt wird oder die Position des zweiten Objekts (O2) bekannt ist.

2. Verfahren zur Bestimmung eines Abstands (D) nach Anspruch 1, **dadurch gekennzeichnet, dass** jede der mehreren Empfangsspulensysteme (ES) eine Empfindlichkeitskurve aufweist und die mehreren Empfangsspulensysteme (ES) so entlang der Wegstrecke (S) positioniert sind, dass sich die Empfindlichkeitskurven von jeweils zueinander unmittelbar benachbarten Empfangsspulensystemen (ES) wenigstens teilweise überlappen.

3. Verfahren zur Bestimmung eines Abstands (D) nach Anspruch 1 oder Anspruch 2, **dadurch gekennzeichnet, dass** die Empfangsspulensysteme (ES) entlang der Wegstrecke (S) um die Wegstrecke (S) herum zickzackförmig angeordnet sind.

4. Verfahren nach einem der vorangegangenen Ansprüche, **dadurch gekennzeichnet, dass** die Wegstrecke (S) als Gerade ausgebildet ist.

5. Verfahren zur Bestimmung eines Abstands (D) nach einem der Ansprüche 1 bis 3, **dadurch gekennzeichnet, dass** die Wegstrecke (S) eine geschlossene Form aufweist.

6. Verfahren zur Bestimmung eines Abstands (D) nach Anspruch 5, **dadurch gekennzeichnet, dass** die Wegstrecke (S) kreisförmig oder elliptisch ausgebildet ist.

7. Verfahren zur Bestimmung eines Abstands (D) nach Anspruch 5 oder 6, **dadurch gekennzeichnet, dass** anhand der Position des ersten Objekts (O1) und der Position des zweiten Objekts (O2) oder anhand des Abstands (D) zwischen dem ersten Objekt (O1) und dem zweiten Objekt ein Winkel (α) zwischen den beiden Positionen bestimmt wird.

8. Verfahren zur Bestimmung eines Abstands (D) nach einem der vorangegangenen Ansprüche, **dadurch gekennzeichnet, dass** ein Abstand (D) mindestens eines in einem dritten Abstand zu der Wegstrecke (S) entlang der Wegstrecke (S) beweglichen weiteren Objekts (O3) zu dem zweiten Objekt (O2) und/oder zu dem ersten Objekt (O1) bestimmt wird, wobei das weitere Objekt (O3) eine metallischen Geber aufweist.

9. Verfahren zur Bestimmung eines Abstands (D) nach einem der vorstehenden Ansprüche, **dadurch gekennzeichnet, dass** die Position des ersten Objektes (O1) und die Position des zweiten Objektes (O2) jeweils mittels Empfindlichkeitskurven der Empfangsspulensysteme (ES) bestimmt werden.

10. Verfahren zur Bestimmung eines Abstands (D) nach einem der vorstehenden Ansprüche, **dadurch gekennzeichnet, dass** die Induktionsspulen einen Spulendurchmesser aufweisen und der kleinste bestimmbare Abstand zwischen dem ersten Objekt (O1) und dem zweiten Objekt (O2) größer als ein Eineinhalbfaches des Spulendurchmessers ist.

11. Verfahren zur Bestimmung eines Abstands (D) nach einem der vorstehenden Ansprüche, **dadurch gekennzeichnet, dass** zusätzlich der erste Abstand (x1) des ersten Objekts (O1) zu der Wegstrecke (S) und/oder der zweite Abstand (x2) des zweiten Objekts (O2) zu der Wegstrecke (S) mittels Empfindlichkeitskurven der Empfangsspulensysteme (ES) bestimmt wird.

12. Verfahren zur Bestimmung eines Abstands (D) nach einem der vorstehenden Ansprüche, **dadurch gekennzeichnet, dass** eine Länge der Wegstrecke (S) höchstens 2m beträgt.
